# FASCICULE DE BREVET EUROPEEN

(11) **EP 4 337 404 B1**
(45) Date de publication et mention de la délivrance du brevet: **09.04.2025**
(21) Numéro de dépôt: 22725279.8
(22) Date de dépôt: 06.05.2022
(51) Int. Cl.: B22F 1/052, B22F 1/142, B22F 9/02, B22F 10/20, B22F 1/06, B22F 8/00, B33Y 10/00, B33Y 40/10, C22B 7/00, C22B 59/00, C22C 38/00, H01F 41/02, B22F 9/00, B22F 9/04, H01F 1/057

(54) **PROCÉDÉ D' ÉLABORATION D'UN AIMANT PERMANENT DE TYPE NDFEB PAR FABRICATION ADDITIVE**
VERFAHREN ZUR HERSTELLUNG EINES NDFEB-PERMANENTMAGNETEN DURCH GENERATIVE FERTIGUNG
METHOD FOR PRODUCING A PERMANENT MAGNET OF NDFEB TYPE BY ADDITIVE MANUFACTURING

(30) Priorité: 10.05.2021 FR 2104941
(43) Date de publication de la demande: 20.03.2024
(73) Titulaire: Mag Reesource, 38042 Grenoble (FR); Centre National de la Recherche Scientifique, 75016 Paris (FR)
(72) Inventeur: RIVOIRARD, Sophie, 38250 LANS EN VERCORS (FR); PETIT, Eric, 86000 POITIERS (FR)
(74) Mandataire: IP Trust
(86) Numéro de dépôt international: PCT/FR2022/050874
(87) Numéro de publication internationale: WO 2022/238643

(56) Documents cités:
- WO-A1-2013/185967
- WO-A1-2018/037241
- DE-A1- 102015 113 880
- FIDLER J ET AL: "OVERVIEW OF ND-FE-B MAGNETS AND COERCIVITY (INVITED)", JOURNAL OF APPLIED PHYSICS, AMERICAN INSTITUTE OF PHYSICS, 2 HUNTINGTON QUADRANGLE, MELVILLE, NY 11747, vol. 79, no. 8, PART 02A, 15 April 1996 (1996-04-15), pages 5029 - 5034, XP000695682, ISSN: 0021-8979, DOI: 10.1063/1.361565
- SEPEHRI-AMIN H ET AL: "Microstructure and magnetic properties of grain boundary modified recycled Nd-Fe-B sintered magnets", JOURNAL OF ALLOYS AND COMPOUNDS, ELSEVIER SEQUOIA, LAUSANNE, CH, vol. 694, 28 September 2016 (2016-09-28), pages 175 - 184, XP029827109, ISSN: 0925-8388, DOI: 10.1016/J.JALLCOM.2016.09.305
- KOLB TOBIAS ET AL: "Laser Beam Melting of NdFeB for the production of rare-earth magnets", 2016 6TH INTERNATIONAL ELECTRIC DRIVES PRODUCTION CONFERENCE (EDPC), IEEE, 30 November 2016 (2016-11-30), pages 34 - 40, XP033065283, ISBN: 978-1-5090-2908-2, [retrieved on 20170210], DOI: 10.1109/EDPC.2016.7851311

## Description

### DOMAINE DE L'INVENTION

La présente invention concerne le domaine des aimants permanents à base de terres rares, élaborés par fabrication additive. Elle concerne en particulier un procédé d'élaboration d'un aimant permanent NdFeB (néodyme fer bore) à partir d'une poudre d'alliage NdFeB particulière, par une technique de fabrication additive impliquant une fusion partielle de la poudre.

### ARRIERE PLAN TECHNOLOGIQUE DE L'INVENTION

La demande en aimants permanents de type NdFeB, qui présentent de hautes rémanence et coercivité, est attendue en forte croissante dans les prochaines années car ces aimants sont utiles dans de nombreux équipements électriques et électroniques ainsi que dans des domaines émergeants tels que les véhicules hybrides ou électriques (moteurs) ou les turbines d'éoliennes (générateurs).

Les aimants de type NdFeB sont les aimants permanents à base de terres rares les plus communément utilisés. Les aimants massifs sont principalement fabriqués par des procédés de frittage, à partir d'une poudre d'alliage NdFeB qui est compactée puis alignée sous champ magnétique avant de subir le traitement thermique de consolidation. Par cette technique, la liberté de design est limitée à des formes standard, telles que des parallélépipèdes, cubes, cylindres, anneaux et segments. Pour rendre possible des formes géométriques plus complexes, des aimants liés sont utilisés. Ils sont fabriqués en mélangeant la poudre d'alliage NdFeB à une matrice polymère, par des procédés de moulage par injection ou compression. Dans ce cas, le volume de matière magnétique active est fortement réduit.

C'est pourquoi, des techniques de fabrication additive commencent également à être mises en œuvre pour fabriquer des aimants NdFeB, avec une grande flexibilité de forme de l'objet aimant. Ces techniques permettent de fabriquer des aimants liés (impliquant une matrice polymère) mais se concentrent également sur la fabrication de pièces métalliques massives afin d'améliorer les performances des objets. Le document WO2013/185967 décrit une méthode de fabrication d'un aimant permanent, impliquant une poudre magnétique NdFeB rapidement solidifiée ayant une microstructure à l'échelle nanométrique. Un faisceau d'énergie focalisé fond partiellement le matériau magnétique pour former une phase de joint de grain isolante électriquement entre les particules de la poudre et conduisant à des porosités isolantes remplies d'air.

La présente invention concerne un procédé simplifié et économique pour l'élaboration d'aimants massifs de type NdFeB performants, par fabrication additive métallique. Le procédé d'élaboration est basé sur l'utilisation d'une poudre d'alliage NdFeB particulière et sur la mise en œuvre d'une fusion partielle de ladite poudre.

### BREVE DESCRIPTION DE L'INVENTION

L'invention concerne un procédé d'élaboration d'un aimant permanent NdFeB sous la forme d'un objet à imprimer, le procédé comprenant les étapes suivantes :
a) la fourniture d'une poudre d'alliage NdFeB constituée de particules présentant une taille, mesurée par diffraction laser, inférieure à 300 microns, parmi lesquelles au moins des particules de taille supérieure à 5 microns sont composées de plusieurs grains d'une phase principale magnétique Nd₂Fe₁₄B séparés les uns des autres par une phase secondaire inter-granulaire non magnétique riche en terres rares, lesdits grains présentant une orientation cristallographique commune qui génère une anisotropie magnétique, la poudre comprenant entre 10% et 50% en volume de phase secondaire inter-granulaire, la taille d'une particule étant définie comme son diamètre équivalent de Sauter,
a') l'ajout optionnel de particules d'une troisième phase métallique non magnétique sans terre rare présentant une température de fusion inférieure ou égale à celle de la phase secondaire inter-granulaire, dans la poudre d'alliage NdFeB, pour former une poudre d'alliage NdFeB additionnée ;
b) la fabrication additive à partir de la poudre d'alliage NdFeB ou de la poudre d'alliage NdFeB additionnée, par une technique impliquant une fusion d'au moins une phase de la poudre, pour l'élaboration de l'objet à imprimer, la fusion étant opérée à une température inférieure à la température de fusion de la phase principale magnétique, de manière à fondre tout ou partie de la phase secondaire inter-granulaire et/ou de la troisième phase quand celle-ci est présente, et non ladite phase principale.

Selon d'autres caractéristiques avantageuses et non limitatives de l'invention, prises seules ou selon toute combinaison techniquement réalisable :
- les particules présentent une taille inférieure à 100 microns ;
- la poudre comprend entre 15% et 50%, voire entre 20% et 30% en volume de phase secondaire inter-granulaire ;
- la poudre comprend entre 1% et 50%, entre 1% et 20%, voire entre 1% et 10% en volume de la troisième phase métallique non magnétique sans terre rare ;
- la température de fusion est inférieure ou égale à 1000°C, préférentiellement inférieure ou égale à 800°C, voire encore préférentiellement inférieure ou égale à 600°C ;
- les particules de la poudre d'alliage NdFeB comprenant de la phase principale magnétique sont orientées avant ou pendant la consolidation de l'aimant permanent NdFeB sous forme d'un objet imprimé, pour conférer une anisotropie magnétique audit aimant ;
- la poudre d'alliage NdFeB comprend une double distribution en taille des particules : une première population centrée sur une première taille, et une deuxième population centrée sur une deuxième taille, la première taille étant une fois et demi à dix fois supérieure à la deuxième taille ;
- la poudre d'alliage NdFeB est issue d'un procédé de recyclage d'aimants massifs NdFeB en fin de vie ;
- l'étape a) comprend le procédé de recyclage qui met en œuvre les étapes suivantes :
   i) la récupération de déchets comprenant des aimants massifs NdFeB à recycler, lesdits aimants NdFeB présentant une phase principale magnétique Nd₂Fe₁₄B et une phase secondaire inter-granulaire non magnétique ;
   ii) la décrépitation à l'hydrogène, appliquée auxdits déchets introduits dans une enceinte d'hydruration, pour former une première poudre avec des particules comprenant de la phase principale magnétique et/ou de la phase inter-granulaire et présentant une taille inférieure ou égale à 5mm ;
   iii) le broyage de la première poudre, pour obtenir une deuxième poudre avec des particules présentant une taille inférieure ou égale à 300 microns, voire inférieure ou égale à 100 microns ;
   iv) la déshydruration de la deuxième poudre, pour former la poudre d'alliage NdFeB fournie à l'étape a) ;
- l'étape ii) de décrépitation est opérée sous une pression partielle ou totale d'hydrogène comprise entre 0,1 bar et 10 bar, les déchets atteignant une température comprise entre 200°C et 500°C ;
- avant l'étape ii), les déchets subissent une étape ii') de préchauffage dans une enceinte de préchauffage disposée dans une première station, jusqu'à une température comprise entre 300°C et 500°C, puis ces déchets chauds subissent l'étape ii) dans l'enceinte d'hydruration disposée dans une deuxième station, la réaction exothermique d'hydruration permettant d'auto-entretenir la température des déchets dans l'enceinte d'hydruration ;
- l'enceinte de préchauffage et l'enceinte d'hydruration sont formées par une seule et même enceinte, déplacée de la première station à la deuxième station, entre l'étape ii') et l'étape ii) ;
- à l'étape iii), le broyage de la première poudre est opéré dans un broyeur à billes ou dans un broyeur à anneaux ou dans un broyeur à jet de gaz ;
- au moins un composé riche en terre(s) rare(s), au moins un composé de matière fraiche d'alliage de type TRFeB, en particulier NdFeB (TR signifiant Nd, Pr, Dy et/ou Tb), et/ou au moins un composé constitué de phase magnétique de type TR₂Fe₁₄B, en particulier Nd₂Fe₁₄B, est(sont) ajouté(s) aux déchets, à la première poudre ou à la deuxième poudre, lors du procédé de recyclage ;
- la troisième phase métallique non magnétique sans terre rare est ajoutée au cours du procédé de recyclage.

### BREVE DESCRIPTION DES FIGURES

D'autres caractéristiques et avantages de l'invention ressortiront de la description détaillée de l'invention qui va suivre en référence aux figures annexées :

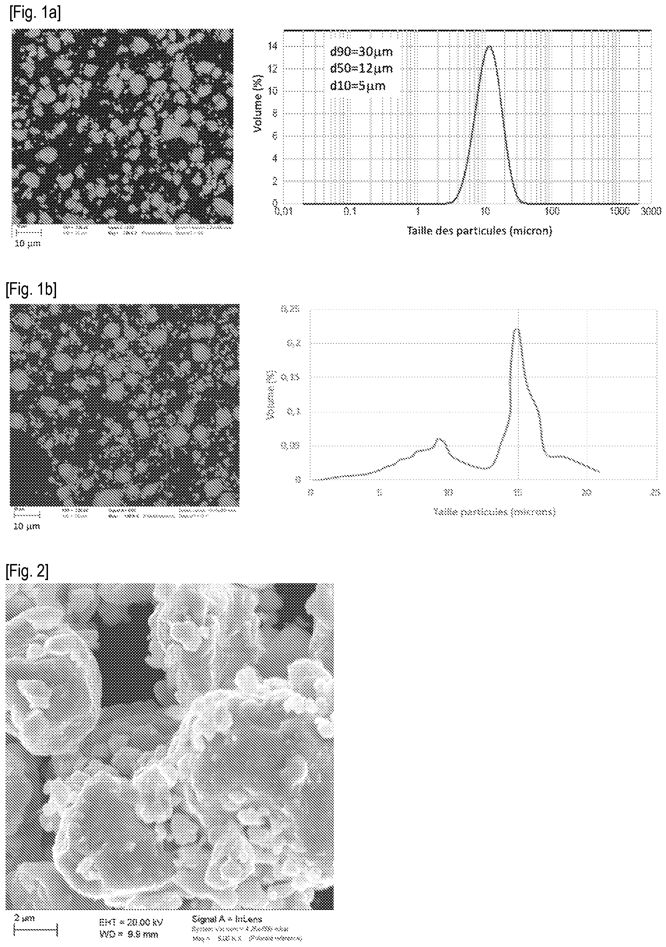

- Les figures 1a et 1b présentent des images par microscopie électronique à balayage (MEB) des particules de deux poudres d'alliage NdFeB, susceptibles d'être fournies à l'étape a) du procédé d'élaboration conforme à l'invention, obtenues par le procédé de recyclage selon l'invention avec deux conditions différentes de broyage à l'étape iii) ; les figures 1a et 1b présentent également les graphes illustrant la distribution en taille des particules desdites poudres, les tailles étant mesurées par diffraction laser (figure 1a) et par analyse d'images (figure 1b) ;
- La figure 2 présente une image en microscopie électronique à balayage des particules d'une poudre d'alliage NdFeB susceptible d'être fournie à l'étape a) du procédé d'élaboration conforme à l'invention, après ajout de particules d'un composé de phase inter-granulaire riche en terre(s) rare(s).

### DESCRIPTION DETAILLEE DE L'INVENTION

La présente invention concerne un procédé d'élaboration d'un aimant massif permanent de type NdFeB sous la forme d'un objet, basé sur une technique de fabrication additive (autrement appelée « impression 3D »), à partir d'une poudre d'alliage NdFeB particulière. Nous parlerons tout au long de cette description d'aimants NdFeB mais cette terminologie englobe tout aimant de type NdFeB, c'est-à-dire susceptible de comprendre divers additifs et/ou d'autres terres rares que le néodyme (par exemple, le dysprosium). Par analogie, et alors qu'elle peut contenir plusieurs types de terres rares et additifs, on nommera la phase principale magnétique de ces aimants, la phase Nd₂Fe₁₄B.

Parmi les techniques connues en fabrication additive de métaux, on peut citer notamment la fusion sur lit de poudre (« Selective Laser Melting - SLM^{™} » ou « Laser Beam Powder Bed Fusion - LB-PBF » selon la terminologie anglo-saxonne), la fusion par faisceau d'électrons (EBAM), le jet de liant (MBJ « metal binder jetting »), le dépôt d'énergie dirigé (DED) et l'impression 3D par pulvérisation à froid (« cold spray additive manufacturing - CSAM »). Dans les deux premières techniques citées, un faisceau lumineux (laser ou électrons) vient, point par point, souder entre elles les particules de poudre libres sur un lit, pour former un objet. Dans la troisième technique, les particules du lit sont soudées entre elles par les gouttelettes d'un liant. Dans les deux derniers exemples, c'est une projection de poudre sur un support qui permet leur adhésion collective par apport d'énergie. Ces différentes techniques soumettent la poudre métallique à différents régimes d'écoulement, de stress et de traitement ; au moins les deux premières techniques citées sont basées sur la fusion d'une poudre d'alliage puis sur la consolidation dudit alliage sous forme d'un objet à imprimer. Des propriétés de poudre d'entrée non optimisées se traduiront directement par des propriétés de la pièce finie (aimant NdFeB) incohérentes et des défauts éventuels.

Dans le cadre de l'invention, la fabrication additive utilisée implique la fusion d'une partie de la poudre d'alliage NdFeB uniquement. Les techniques connues précitées pourront donc être implémentées, mais dans les conditions particulières de fusion qui vont être décrites ci-après. Comme cela sera apparent tout au long de cette description, l'efficacité et l'originalité du procédé d'élaboration selon l'invention vient de la combinaison d'une poudre d'alliage NdFeB particulière et de conditions de fabrication additive par fusion modifiées par rapport aux conditions habituellement mises en œuvre.

Le procédé d'élaboration comprend en premier lieu une étape de fourniture d'une poudre d'alliage NdFeB constituée de particules présentant une taille inférieure à 300 microns, voire à 100 microns. Ce que l'on appelle ici taille d'une particule est son « diamètre équivalent de Sauter ». Le « diamètre équivalent de Sauter » est le diamètre de la sphère qui se comporterait de manière identique lors d'une mesure granulométrique par une technique définie, par exemple par diffraction laser.

Les particules présentent une forme peu anguleuse, comme cela est visible sur les deux exemples des figures 1a et 1b ; il n'est pas requis que les particules soient parfaitement sphériques, mais leur forme est attendue sensiblement arrondie.

L'alliage qui compose la poudre comprend une phase principale magnétique Nd₂Fe₁₄B, qui représente typiquement entre 50% et 90% en volume dudit alliage. La température de fusion de cette phase principale est d'environ 1180°C et peut sensiblement varier selon la composition de l'alliage. L'alliage NdFeB comprend également une phase secondaire non magnétique, dite inter-granulaire car elle sert à découpler (isoler) magnétiquement les grains de phase principale Nd₂Fe₁₄B. La phase secondaire est composée de plusieurs phases riches en terres rares, lesquelles présentent des températures de fusion comprises entre 500°C et 800°C, selon les compositions de l'alliage. La phase secondaire inter-granulaire représente typiquement entre 10% et 50% en volume de l'alliage. Avantageusement, la poudre d'alliage fournie à l'étape a) comprend entre 15% et 50%, voire entre 20% et 30% en volume de phase secondaire inter-granulaire.

La distribution en taille des particules de la poudre, pour chaque exemple illustré en figure 1a et en figure 1b, est présentée sur ces mêmes figures. Chaque particule peut être constituée d'un ou de plusieurs grains de phase principale et/ou de phase secondaire.

Dans la poudre fournie à l'étape a), au moins des particules de taille supérieure à 5 microns sont composées de plusieurs grains de la phase principale magnétique Nd₂Fe₁₄B séparés les uns des autres par la phase secondaire inter-granulaire non magnétique : lesdits grains présentent une orientation cristallographique commune qui génère une anisotropie magnétique. Ces particules multi-grains peuvent ainsi être utilisées, comme des particules mono-grain anisotropes.

D'autres propriétés spécifiques à la poudre d'alliage NdFeB sont nécessaires pour que l'objet visé soit un aimant massif performant. Un aimant est principalement caractérisé par trois grandeurs principales : la coercitivité (notée Hc et exprimée en kA/m), la rémanence (ou aimantation rémanente, notée Br et exprimée en Tesla) et le produit énergétique maximal (noté BHmax et exprimé en MGOe). La coercitivité correspond à la résistance à la désaimantation de l'aimant lorsqu'il est soumis à un environnement soit démagnétisant, soit à une température élevée (supérieure à 100°C). Ainsi, plus la coercivité est forte, meilleure est la tenue en température en fonctionnement. La rémanence indique l'aimantation et donc la force magnétique que peut fournir l'aimant au système. Le produit énergétique maximal est caractéristique de l'énergie globale que peut fournir l'aimant à son point de fonctionnement.

La poudre d'alliage, fournie à l'étape a), présente typiquement une coercitivité comprise entre 500 kA/m et 2400 kA/m et une aimantation rémanente comprise entre 0.5 T et 1.4 T, caractéristiques magnétiques très favorables à l'élaboration d'un aimant permanent.

Un procédé de fabrication d'une telle poudre sera décrit plus loin, à titre d'exemple. Il est néanmoins rappelé que tout procédé permettant d'obtenir une poudre d'alliage NdFeB présentant les caractéristiques précitées pourrait être mis en œuvre pour réaliser l'étape a) de la présente invention.

Le procédé d'élaboration peut comprendre une étape a'), optionnelle, d'ajout de particules d'une troisième phase métallique non magnétique sans terre rare présentant une température de fusion inférieure ou égale à celle de la phase secondaire inter-granulaire, dans la poudre d'alliage NdFeB, pour former une poudre d'alliage NdFeB dite additionnée. La troisième phase est destinée à favoriser la consolidation du nouvel aimant, pendant l'étape ultérieure b) du procédé, en servant de matrice liante.

La troisième phase peut être formée à partir d'un ou plusieurs éléments choisi(s) parmi Al, Zn, Sn, In, Li, Bi, Cd, Pb, leurs alliages ou autres alliages sans terre rare (par exemple Ag-Cu). Cette troisième phase présente une température de fusion typiquement inférieure ou égale à 800°C. Les particules de la troisième phase pourront par exemple présenter une granulométrie dans une gamme comparable à celle des particules de la poudre d'alliage NdFeB.

Préférentiellement, la poudre d'alliage NdFeB additionnée comprend entre 1% et 50%, entre 1% et 20%, voire entre 1% et 10% en volume de cette troisième phase métallique non magnétique sans terre rare.

Le procédé d'élaboration comprend ensuite une étape b) de fabrication additive métallique de l'aimant permanent NdFeB sous la forme d'un objet à imprimer, à partir de la poudre d'alliage NdFeB, additionnée de la troisième phase ou pas. L'une ou l'autre des techniques précédemment évoquées, impliquant une fusion de la poudre d'alliage, peut être mise en œuvre.

Les deux propriétés clef de la poudre pour l'obtention d'un objet imprimé de qualité sont la compacité (densité d'empilement) et la fluidité. Les poudres qui se compactent bien pour donner une densité élevée sont associées à la production d'objets de qualité constante et avec moins de défauts. La fluidité, quant à elle, est plus étroitement associée à l'efficacité du processus. La capacité de se répartir uniformément sur un lit de poudre et de former une couche fine uniforme sans vide est essentielle pour les processus de fusion en lit de poudre, tandis qu'une fluidité constante en tant que flux de poudre aérée, est nécessaire pour une technique par projection. Ces exigences s'intensifient à mesure que les vitesses de fabrication additive augmentent.

La densité apparente et la fluidité sont toutes deux directement influencées par la taille et la forme des particules de la poudre. D'une manière générale, les particules lisses, de forme régulière s'écoulent plus facilement que celles ayant une surface rugueuse et/ou une forme irrégulière. Les surfaces plus rugueuses entraînent une friction inter-particulaire accrue tandis que les particules de forme irrégulière sont plus sujettes à une agrégation mécanique ; ces deux effets diminuent la fluidité. De même, les particules de forme arrondie ont tendance à se compacter plus efficacement que celles qui sont irrégulières, ce qui donne lieu à des densités apparentes plus élevées. La sphéricité est largement appréciée dans l'industrie, ce qui explique que la plupart des poudres habituellement utilisées en fabrication additive sont produites par atomisation de gaz.

En ce qui concerne la granulométrie, les poudres métalliques sont nécessairement fines pour, par exemple, répondre à l'exigence de former un lit de poudre de quelques dizaines de microns d'épaisseur. Cependant, et parce que les forces d'attraction entre les particules augmentent avec la diminution de la taille des particules, les poudres plus fines s'écoulent généralement moins librement que les grosses.

Une compacité maximale peut être obtenue avec une distribution qui comprend à la fois des particules grossières et fines, les particules plus fines augmentant la densité en remplissant les interstices laissés par les plus grosses. Ainsi, la poudre d'alliage NdFeB fournie à l'étape a) comprend avantageusement une double distribution en taille des particules : à savoir, une première population de particules centrée sur une première taille, et une deuxième population de particules centrée sur une deuxième taille, la première taille étant une fois et demi à dix fois supérieure à la deuxième taille. Typiquement, la première taille peut être comprise entre 15 et 90 microns, et la deuxième taille entre 1 et 15 microns. Dans l'exemple illustré sur la figure 1b, la première taille est d'environ 15 microns, et la deuxième taille est d'environ 9 microns.

De plus, la présence de particules de phase secondaire inter-granulaire riche en terres rares et/ou de particules de la troisième phase métallique non magnétique sans terre rare (si elle est présente), permet de réduire les interactions entre les particules magnétiques et d'améliorer grandement la coulabilité de la poudre d'alliage. Cela permet ainsi de s'affranchir de la contrainte de forme des particules et donne des fluidités importantes même avec des particules anguleuses.

A l'étape b) du procédé d'élaboration selon l'invention, contrairement aux conditions habituellement appliquées qui visent à fondre tout l'alliage NdFeB de la poudre, avant de consolider la poudre sous la forme de l'objet souhaité, la fusion de l'alliage est ici partielle : elle est opérée à une température inférieure à la température de fusion de la phase principale Nd₂Fe₁₄B, de manière à fondre tout ou partie de la phase secondaire inter-granulaire et/ou de la troisième phase métallique non magnétique sans terre rare (si elle est présente), et non ladite phase principale. Cette température de fusion est de l'ordre de 1180°C mais peut sensiblement varier selon la composition de l'alliage NdFeB.

Typiquement, la fusion dans le procédé d'élaboration est donc inférieure à 1180°C, préférentiellement inférieure ou égale à 1000°C, voire inférieure ou égale à 800°C, voire encore inférieure ou égale à 600°C.

L'apport d'énergie pour la fusion est réalisé par rayonnement (laser, électrons...) et/ou par conduction via un support chauffant contre lequel est déposée la poudre et/ou par convection dans un gaz chaud.

La consolidation entre les particules est obtenue après cette fusion partielle de l'alliage. Cela présente l'avantage de ne pas affecter les grains de la phase principale magnétique, que ce soit en termes de taille, de forme ou de composition. Ainsi, on peut conserver au mieux les propriétés magnétiques intrinsèques de l'alliage NdFeB de la poudre. En outre, la fusion partielle de la poudre d'alliage simplifie le procédé d'élaboration. Enfin, la seule fusion de la phase inter-granulaire et/ou de la troisième phase (et non de la phase principale), favorise l'enrobage des grains de phase principale magnétique, pour un découplage magnétique efficace desdits grains, permettant ainsi l'obtention d'une coercivité élevée pour l'aimant permanent élaboré. Ainsi, pour que la consolidation des particules s'opère efficacement et que la coercivité du futur aimant soit haute, il est important qu'une quantité suffisante au moins de phase secondaire inter-granulaire soit présente dans la poudre, à savoir entre 10% et 50% en volume, préférentiellement entre 15% et 50%, voire encore préférentiellement entre 20% et 30%. En outre, comme évoqué précédemment, la poudre d'alliage NdFeB additionnée peut comprend entre 1% et 50%, entre 1% et 20%, voire entre 1% et 10% en volume de la troisième phase métallique non magnétique sans terre rare Au cours de la consolidation, la coercitivité sera développée à condition de maintenir une atmosphère inerte de qualité (taux d'oxygène inférieur à 0.1%) dans la chambre d'impression.

Dans le procédé d'élaboration selon l'invention, la rémanence peut également être optimisée au moment de la fabrication additive, du fait de l'orientation cristallographique des grains de la phase principale magnétique, grâce à un système d'orientation magnétique ou mécanique des particules avant leur consolidation. Parce que la poudre comprend des particules anisotropes (c'est-à-dire dont les grains de phase magnétique Nd₂Fe₁₄B présentent une orientation cristallographique commune générant une anisotropie magnétique), un aimant ou électro-aimant (système d'orientation magnétique) judicieusement placé autour ou à proximité de l'objet à imprimer permettra d'orienter chaque particule comprenant de la phase principale, juste avant sa consolidation.

Alternativement, on pourra soumettre la couche qui vient d'être imprimée à une opération de forgeage dans une direction perpendiculaire au plan de la couche et avec une vitesse de déformation d'au moins 8/s, de manière à texturer mécaniquement chaque particule de poudre et/ou grain de phase magnétique, conduisant ainsi à une orientation magnétique anisotrope de la couche. Ce système d'orientation mécanique peut éventuellement être couplé au système d'orientation magnétique précité.

Un autre type d'opération mécanique pourra éventuellement remplacer l'opération de forgeage (par exemple, mise en œuvre d'un rouleau simulant un laminage ou d'un système vibratoire pour obtenir un tassement), pour réaliser l'orientation magnétique anisotrope et/ou pour densifier le lit de poudre (en particulier pour éviter des défauts de porosité ou des fissures dans l'objet imprimé).

Selon une variante, on peut utiliser successivement différents mélanges de poudres pour former différentes couches de l'objet à imprimer, par exemple pour conférer des propriétés magnétiques différentes auxdites couches, ou encore pour former une couche externe non magnétique de protection.

Revenant à l'étape a) du procédé d'élaboration, un mode avantageux de fabrication de la poudre d'alliage NdFeB va maintenant être décrit.

Selon ce mode avantageux, la poudre d'alliage NdFeB est issue d'un procédé de recyclage d'aimants massifs NdFeB en fin de vie ou rebus de fabrication. L'étape a) comprend ledit procédé de recyclage, qui met en œuvre la séquence d'étapes ci-après :
i) la récupération de déchets comprenant des aimants NdFeB à recycler ;
ii) la décrépitation à l'hydrogène, appliquée auxdits déchets, pour former une première poudre avec des particules présentant une taille inférieure ou égale à 5mm ;
iii) le broyage de la première poudre, pour obtenir une deuxième poudre avec des particules présentant une taille inférieure ou égale à 300 microns, voire inférieure ou égale à 100 microns ;
iv) la déshydruration de la deuxième poudre, pour former la poudre d'alliage NdFeB fournie à l'étape a).

Une première étape i) du procédé de recyclage consiste en la récupération de déchets comprenant des aimants NdFeB à recycler massifs (c'est-à-dire dépourvus de matrice en polymère). Par déchets, on entend des aimants massifs NdFeB, rebus de fabrication ; on entend également tout type de pièces mécaniques ou électroniques, en fin de vie ou déclassées dans un processus de fabrication, comprenant des aimants NdFeB dont la matière est susceptible d'être recyclée. A titre d'exemple, les déchets peuvent consister en des aimants NdFeB de disques durs solidaires d'une patte d'acier, des aimants NdFeB de moteurs électriques, etc. Du fait de leurs propriétés d'aimantation, ces aimants sont souvent très fermement accrochés à une pièce mécanique (métallique) liée à l'usage antérieur ; il est néanmoins possible d'obtenir des déchets d'aimants NdFeB seuls, c'est-à-dire dissociés des pièces mécaniques de l'usage antérieur.

De manière générale, les aimants NdFeB provenant de déchets peuvent être nus ou recouverts d'une couche de protection, typiquement de nature métallique (à base de nickel ou de zinc par exemple) ou polymère (époxy).

Un aimant massif NdFeB à recycler forme un alliage qui comprend une phase principale Nd₂Fe₁₄B magnétique représentant typiquement 85% +/-10% en volume de l'alliage. L'alliage comprend également une phase secondaire non magnétique, dite inter-granulaire car elle sert à découpler (isoler) magnétiquement les grains de phase principale Nd₂Fe₁₄B. La phase secondaire est composée de plusieurs phases riches en terres rares, et représente typiquement 15% +/-10% en volume de l'alliage.

La deuxième étape ii) correspond à une décrépitation à l'hydrogène, appliquée auxdits déchets introduits dans une enceinte d'hydruration : la décrépitation correspond à une réaction d'hydruration de l'alliage NdFeB, qui provoque la fragmentation de l'aimant à recycler sous forme de poudre. Dans l'enceinte d'hydruration, une pression partielle ou totale d'hydrogène comprise entre 0.1 bar et 10 bar, préférentiellement entre 1 et 4 bar, est appliquée. La température peut être comprise entre la température ambiante et 550°C.

Avantageusement, la température à laquelle les déchets sont portés lors de l'étape ii) de décrépitation est comprise entre 200°C et 500°C. Dans cette gamme de températures, c'est la phase secondaire inter-granulaire de l'alliage NdFeB qui est essentiellement hydrurée. La phase principale Nd₂Fe₁₄B n'est pas hydrurée ou très faiblement, car l'hydrure associé n'est pas stable au-delà de 200°C ; en effet, la phase principale absorbe l'hydrogène et crée un hydrure stable à plus basses températures, typiquement entre l'ambiante et 150°C. L'avantage d'une étape ii) de décrépitation à l'hydrogène réalisée entre 200°C et 500°C, et préférentiellement entre 350°C et 450°C, est de diminuer la quantité d'hydrogène (H₂) requis pour réaliser l'hydruration, puisque seule la phase secondaire inter-granulaire est visée et qu'elle représente en général moins d'un quart en volume de l'alliage. On passe typiquement de 4g d'H2 par kg d'aimant hydruré à température ambiante, à 1,25g d'H2 par kg d'aimant hydruré à 400°C. Un autre avantage vient du fait que les grains de phase principale magnétique vont être très peu affectés et modifiés par cette étape, et vont ainsi conserver leurs propriétés et structures initiales, et en particulier leur orientation cristallographique (c'est-à-dire celles qu'ils avaient dans l'aimant NdFeB à recycler).

Selon une variante particulièrement avantageuse, avant l'étape ii) de décrépitation, les déchets subissent une étape ii') de préchauffage dans une enceinte de préchauffage disposée dans une première station, jusqu'à une température comprise entre 300°C et 500°C ; puis ces déchets chauds subissent l'étape ii) dans l'enceinte d'hydruration disposée dans une deuxième station, distincte de la première station, la réaction exothermique d'hydruration permettant d'auto-entretenir la température des déchets dans l'enceinte d'hydruration, sans qu'aucun moyen de chauffage soit requis dans ladite deuxième station. La réalisation des étapes ii') et ii), respectivement dans deux stations distinctes simplifie grandement les équipements et infrastructures pour l'implémentation du procédé de recyclage, en décorrélant les besoins de chauffage (première station) des amenées d'hydrogène (deuxième station) et sécurise les opérations.

La première station est équipée de moyens de chauffage ; elle peut par exemple consister en un four de recuit, dans lequel, l'enceinte de préchauffage, remplie de déchets, est disposée. La première station comprend avantageusement un circuit de gaz incluant au moins une source de gaz neutre et une évacuation de gaz, qui peuvent être raccordées à l'enceinte, pour ajuster son atmosphère interne. Celle-ci est préférentiellement choisie inerte, par exemple à base d'argon.

La deuxième station est équipée d'une source d'hydrogène et de moyens de pompage. Il est également avantageux d'asservir la distribution en hydrogène par la source d'hydrogène, de manière à maintenir la pression d'hydrogène dans l'enceinte d'hydruration au-dessus d'un seuil prédéfini, par exemple un seuil à 25% en-dessous d'une pression initiale, durant toute la durée de la décrépitation, au fur et à mesure que l'hydrogène est absorbé par l'alliage NdFeB des déchets.

L'enceinte de préchauffage et l'enceinte d'hydruration peuvent être formées par une seule et même enceinte, déplacée de la première station à la deuxième station, entre l'étape ii') et l'étape ii). Alternativement, les déchets chauds issus de l'étape ii') peuvent être transvasés de l'enceinte de préchauffage dans l'enceinte d'hydruration, avant l'étape ii).

Bien sûr, l'une et l'autre des enceintes doit être parfaitement étanche, compatible avec une pression allant au moins jusqu'à 10 bars et avec des températures typiquement jusqu'à 600°C.

Ce préchauffage des déchets est avantageux en ce qu'il favorise la désaimantation des différents matériaux contenus dans les déchets et donc la séparation physique de potentielles pièces métalliques, initialement maintenues solidaires par attraction magnétique.

Dans le cas où l'étape ii) serait opérée à basses températures (< 150°C), une étape préalable de désaimantation des déchets, consistant en un recuit à une température supérieure à 250°C, typiquement 400°C, puis à un refroidissement plus ou moins rapide autour de la température ambiante, est appliquée.

L'étape ii) a une durée typique comprise entre quelques minutes et 12 heures. La fin de la réaction d'hydruration est détectée, soit par une baisse de la température de l'enceinte d'hydruration (mesurée via un capteur de température plongé dans l'enceinte) soit par la mesure d'une pression à l'intérieur de l'enceinte d'hydruration qui tend à être constante, car les aimants NdFeB des déchets n'absorbent plus l'hydrogène.

La deuxième station est avantageusement équipée d'un système d'agitation, apte à transmettre un mouvement à l'enceinte d'hydruration au cours de l'étape ii). Le système d'agitation peut consister en un système vibrant (amplitude de vibration typiquement comprise entre 0,5mm et 3mm) ou en un système de balancement ondulatoire. L'agitation de l'enceinte favorise la séparation entre les aimants NdFeB et les autres pièces, et la fragmentation de l'alliage NdFeB par décrépitation à l'hydrogène. Les aimants NdFeB des déchets traités à l'étape ii) vont ainsi évoluer, au fur et à mesure de cette étape, vers une poudre (appelée première poudre) dont les particules comprennent de la phase principale Nd₂Fe₁₄B et/ou de la phase secondaire inter-granulaire, et présentent une taille inférieure ou égale à 5mm, voire inférieure ou égale à 1mm.

De manière préférentiellement, le procédé de recyclage comprend un tamisage de la première poudre, effectuée durant ou après l'étape ii) de décrépitation.

Pour que le tamisage soit opéré au cours de l'étape ii), il est nécessaire qu'au moins un tamis soit incorporé à l'enceinte d'hydruration : les déchets chauds sont disposés sur ledit tamis, et au fur et à mesure de l'hydruration de l'alliage NdFeB, les particules dudit alliage, de taille inférieure à la maille du tamis, tombent dans la partie de l'enceinte en-dessous du tamis. La chute des particules de l'alliage à travers le tamis est favorisée par l'agitation appliquée à l'enceinte d'hydruration disposée dans la deuxième station.

Alternativement, la première poudre d'alliage NdFeB et les autres restes de déchets (s'il y en a) obtenus à l'issue de l'étape ii) sont transférés de l'enceinte d'hydruration vers un dispositif de tamisage, par exemple par une trappe associée à une vanne, aménagée en partie inférieure de l'enceinte. Le dispositif de tamisage peut être muni d'un ou plusieurs tamis. Il peut éventuellement être disposé dans la deuxième station et subir, comme l'enceinte d'hydruration, le mouvement du système d'agitation, ou être muni de son propre système d'agitation.

La maille du (ou des) tamis utilisé(s) pour le tamisage pourra être de 1cm, 5mm, 1mm, 500 microns, 300 microns, 150 microns, 100 microns, 50 microns, 10 microns ou encore inférieure. On pourra éventuellement ajouter des billes, de taille supérieure à celle des particules de la première poudre (par exemple, 10 fois plus grande), sur le tamis pour effectuer un pré-broyage et faciliter le tamisage de ladite poudre.

Le procédé de recyclage comprend ensuite une étape iii) de broyage de la première poudre issue de l'étape ii) de décrépitation, pour ajuster la distribution en taille des particules d'alliage recyclé et également pour adoucir leur forme. La deuxième poudre obtenue après broyage comprend des particules, de forme plus arrondie, et dont la taille est inférieure ou égale à 300 microns, inférieure ou égale à 100 microns, voire inférieure ou égale à 50 microns.

Tout moyen de broyage connu peut être mis en œuvre à l'étape e), notamment un broyeur à billes, un broyeur à anneaux ou un broyeur à jet de gaz (« jet milling » selon la terminologie anglo-saxonne). Cette dernière technique est connue et habituellement mise en œuvre pour le broyage de poudres.

Le broyage par anneaux est réalisé par oscillation circulaire et horizontale d'un anneau et d'un noyau sur un plateau oscillant. L'échantillon est alors fragmenté sous les forces de pression, de choc et de friction jusqu'à une taille pouvant aller en-dessous de 20 microns.

La description qui suit porte particulièrement sur le broyage à billes, mode privilégié de l'invention. Un broyeur à billes comprend un tambour rotatif ou des pales rotatives disposées dans un tambour fixe, dans lequel est placée tout ou partie de la première poudre, seule ou accompagnée de billes. La première poudre (ou la faction de celle-ci destinée à subir l'étape de broyage) sera donc transférée de la deuxième station à une troisième station de broyage.

Lorsqu'elles sont utilisées, ces billes peuvent être choisies en inox et présentent avantageusement un diamètre compris entre 1mm et 30mm, préférentiellement entre 1mm et 10mm, par exemple 5mm ; le ratio massique entre la première poudre et les billes est préférentiellement choisi entre 0,5 et 3.

Avec ou sans bille, le broyage de l'étape iii) s'opère de manière avantageuse en appliquant une séquence d'agitation avec une vitesse de rotation du tambour comprise entre 100 tr/min et 800 tr/min, par exemple 450 tr/min, pendant une durée comprise entre 10s et 1h, par exemple 10 min, suivie d'une séquence de repos, pendant une durée comprise entre quelques secondes (typiquement 5s) et 40s, par exemple 20s. La séquence d'agitation et la séquence de repos peuvent être successivement répétées, entre 2 et 500 fois, jusqu'à l'obtention d'une granulométrie définie de deuxième poudre.

A titre d'exemple, les figures 1a et 1b correspondent à des images MEB des particules d'une deuxième poudre, ayant subi l'étape ii) de broyage, pour différentes répétitions des séquences d'agitation et de repos précitées, respectivement 30 itérations et 300 itérations ; dans ces exemples, le broyage a été opéré avec des billes.

Le procédé de recyclage comprend enfin une étape iv) de déshydruration appliquée à la deuxième poudre, afin d'extraire l'hydrogène présent dans les particules d'alliage. La déshydruration est opérée en chauffant la poudre sous vide secondaire, jusqu'à environ 800°C.

La poudre d'alliage NdFeB issue du procédé de recyclage décrit comprend des particules composées d'un ou de plusieurs grains de la phase principale magnétique Nd₂Fe₁₄B ; lorsqu'il y a plusieurs grains, ils sont séparés les uns des autres par la phase secondaire inter-granulaire non magnétique, riche en terres rares. Le fort atout de cette poudre d'alliage est que lesdits grains, compris dans une même particule, présentent une orientation cristallographique commune qui génère une anisotropie magnétique. Ces particules multi-grains peuvent ainsi être utilisées, comme des particules mono-grain anisotropes, pour la fabrication de nouveaux aimants NdFeB dans le procédé d'élaboration selon l'invention.

Une poudre anisotrope est habituellement obtenue par des procédés couteux et complexes tels que le procédé HDDR (hydrogénation - disproportionation - désorption - recombinaison) ; le procédé de recyclage décrit ici permet l'obtention d'une poudre anisotrope de bonne qualité, de manière simple et économique.

La poudre d'alliage NdFeB comprend entre 10% et 50% en volume de phase secondaire inter-granulaire. Elle peut être directement utilisée pour la fabrication d'aimants permanents NdFeB.

Selon une variante avantageuse du procédé de recyclage, des particules constituées d'un composé riche en terre(s) rare(s) peuvent être ajoutées, pour ajuster la teneur en phase secondaire inter-granulaire (entre 10% et 50%) de la poudre d'alliage NdFeB fournie à l'étape a) ou modifier sa composition, si besoin.

Cet ajout peut par exemple être fait à partir de néodyme (Nd) ou d'autres composés de terres rares comprenant des éléments tels que Nd, Dy, Tb, Pr, Co, Fe, Cu, Al, Nb, Ti, Zr, etc. La méthode suivante peut notamment être employée pour introduire le composé de phase secondaire inter-granulaire, riche en terre(s) rare(s) :
- hydruration du composé, par exemple conformément ou simultanément à l'étape ii) du procédé de recyclage, pour former des hydrures ;
- broyage des hydrures, par exemple conformément ou simultanément à l'étape iii) du procédé de recyclage ; un broyage va facilement permettre d'obtenir une granulométrie très fine des hydrures, soit des particules présentant une taille typiquement inférieure ou égale à 10 microns, inférieure ou égale à 2 microns, voire inférieure ou égale à 1 micron ;
- ajout de la poudre du composé à la deuxième poudre à hauteur de quelques dixièmes de pourcent à quelques pourcents en volume (typiquement entre 1% et 10%), au cours d'un léger co-broyage, dans le cas où le broyage du composé hydruré n'a pas été effectué durant l'étape iii).

La déshydruration est opérée au cours de l'étape iv) du procédé de recyclage (ou indépendamment pour le composé de terres rares et pour la poudre, lesquels sont mélangés à l'issue de la déshydruration), pour former la poudre d'alliage NdFeB fournie à l'étape a).

L'ajout d'un tel composé permet d'augmenter la quantité et la qualité de la phase inter-granulaire, ce qui présente un avantage certain pour la consolidation lors de la fabrication additive.

L'image MEB de la figure 2 donne un aperçu du mélange obtenu après cet ajout de particules de composé de phase inter-granulaire à la deuxième poudre : les particules les plus fines (<1 micron) correspondent à la phase inter-granulaire ajoutée, riche en terre(s) rare(s). Les plus grosses particules font partie de la deuxième poudre.

Selon une autre variante, pour améliorer les performances du nouvel aimant qui sera formé à partir de la poudre recyclée, il est possible d'ajouter un composé proche de la composition de l'aimant initial (matière fraiche de type TRFeB), typiquement à hauteur de 1% à 90%, préférentiellement entre 1% et 40%, préférentiellement entre 2% et 15%. Alternativement, il est envisageable de n'ajouter qu'un composé constitué de phase magnétique de type TR₂Fe₁₄B, en particulier Nd₂Fe₁₄B.

Pour les différentes variantes évoquées, les composés ajoutés pourront, soit être additionnés aux déchets et traités simultanément selon le procédé de recyclage précité, soit être traités et modifiés sous forme de poudre, puis additionnés à la deuxième poudre, à une étape quelconque du procédé de recyclage, avant ou après l'étape f) de déshydruration.

Même si un exemple de procédé de fabrication de la poudre d'alliage NdFeB fournie à l'étape a) du procédé d'élaboration d'un objet en aimant permanent NdFeB, basé sur le recyclage d'aimants massifs NdFeB en fin de vie, a été décrit ici, cela ne limite en rien les possibilités de fabrication de ladite poudre d'alliage par d'autres techniques.

Le procédé d'élaboration d'un aimant permanent NdFeB par fabrication additive selon l'invention peut trouver des applications dans de multiples domaines, requérant des aimants permanents performants sous des formes d'objets très variées spécifiquement accessibles par impression 3D, par exemple l'électronique, l'automobile, l'informatique, etc.

Bien entendu, l'invention n'est pas limitée aux modes de réalisation et aux exemples décrits, et on peut y apporter des variantes de réalisation sans sortir du cadre de l'invention tel que défini par les revendications.

## Revendications

1. Procédé d'élaboration d'un aimant permanent NdFeB sous la forme d'un objet à imprimer, le procédé comprenant les étapes suivantes :
a) la fourniture d'une poudre d'alliage NdFeB constituée de particules présentant une taille, mesurée par diffraction laser, inférieure à 300 microns, parmi lesquelles au moins des particules de taille supérieure à 5 microns sont composées de plusieurs grains d'une phase principale magnétique Nd₂Fe₁₄B séparés les uns des autres par une phase secondaire inter-granulaire non magnétique riche en terres rares, lesdits grains présentant une orientation cristallographique commune qui génère une anisotropie magnétique, la poudre comprenant entre 10% et 50% en volume de phase secondaire inter-granulaire, la taille d'une particule étant définie comme son diamètre équivalent de Sauter,
a') l'ajout optionnel de particules d'une troisième phase métallique non magnétique sans terre rare présentant une température de fusion inférieure ou égale à celle de la phase secondaire inter-granulaire, dans la poudre d'alliage NdFeB, pour former une poudre d'alliage NdFeB additionnée,
b) la fabrication additive à partir de la poudre d'alliage NdFeB ou de la poudre d'alliage NdFeB additionnée, par une technique impliquant une fusion d'au moins une phase de la poudre, pour l'élaboration de l'objet à imprimer, la fusion étant opérée à une température inférieure à la température de fusion de la phase principale magnétique, de manière à fondre tout ou partie de la phase secondaire inter-granulaire et/ou de la troisième phase quand celle-ci est présente, et non ladite phase principale.

2. Procédé d'élaboration selon la revendication précédente, dans lequel la température de fusion est inférieure ou égale à 1000°C, préférentiellement inférieure ou égale à 800°C, voire encore préférentiellement inférieure ou égale à 600°C.

3. Procédé d'élaboration selon l'une des revendications précédentes, dans lequel les particules de la poudre d'alliage NdFeB comprenant de la phase principale magnétique sont orientées avant ou pendant la consolidation de l'aimant permanent NdFeB sous forme d'un objet imprimé, pour conférer une anisotropie magnétique audit aimant.

4. Procédé d'élaboration selon l'une des revendications précédentes, dans lequel la poudre d'alliage NdFeB comprend une double distribution en taille des particules :
- une première population centrée sur une première taille, et
- une deuxième population centrée sur une deuxième taille, la première taille étant une fois et demi à dix fois supérieure à la deuxième taille.

5. Procédé d'élaboration selon l'une des revendications précédentes, dans lequel la poudre d'alliage NdFeB est issue d'un procédé de recyclage d'aimants massifs NdFeB en fin de vie.

6. Procédé d'élaboration selon la revendication précédente, dans lequel l'étape a) comprend le procédé de recyclage qui met en œuvre les étapes suivantes :
i) la récupération de déchets comprenant des aimants massifs NdFeB à recycler, lesdits aimants NdFeB présentant une phase principale magnétique Nd₂Fe₁₄B et une phase secondaire inter-granulaire non magnétique ;
ii) la décrépitation à l'hydrogène, appliquée auxdits déchets introduits dans une enceinte d'hydruration, pour former une première poudre avec des particules comprenant de la phase principale magnétique et/ou de la phase inter-granulaire et présentant une taille inférieure ou égale à 5mm ;
iii) le broyage de la première poudre, pour obtenir une deuxième poudre avec des particules présentant une taille inférieure ou égale à 300 microns ;
iv) la déshydruration de la deuxième poudre, pour former la poudre d'alliage NdFeB fournie à l'étape a).

7. Procédé d'élaboration selon la revendication précédente, dans lequel l'étape ii) de décrépitation est opérée sous une pression partielle ou totale d'hydrogène comprise entre 0,1 bar et 10 bar, les déchets atteignant une température comprise entre 200°C et 500°C.

8. Procédé d'élaboration selon la revendication précédente, dans lequel, avant l'étape ii), les déchets subissent une étape ii') de préchauffage dans une enceinte de préchauffage disposée dans une première station, jusqu'à une température comprise entre 300°C et 500°C, puis ces déchets chauds subissent l'étape ii) dans l'enceinte d'hydruration disposée dans une deuxième station, la réaction exothermique d'hydruration permettant d'auto-entretenir la température des déchets dans l'enceinte d'hydruration.

9. Procédé d'élaboration selon la revendication précédente dans lequel, l'enceinte de préchauffage et l'enceinte d'hydruration sont formées par une seule et même enceinte, déplacée de la première station à la deuxième station, entre l'étape ii') et l'étape ii).

10. Procédé d'élaboration selon l'une des revendications 6 à 9, dans lequel, à l'étape iii), le broyage de la première poudre est opéré dans un broyeur à billes ou dans un broyeur à anneaux ou dans un broyeur à jet de gaz.

11. Procédé d'élaboration selon l'une des revendications 6 à 10, dans lequel au moins un composé riche en terre(s) rare(s), au moins un composé de matière fraiche d'alliage de type TRFeB, en particulier NdFeB (TR signifiant Nd, Pr, Dy et/ou Tb), et/ou au moins un composé constitué de phase magnétique de type TR₂Fe₁₄B, en particulier Nd₂Fe₁₄B, est(sont) ajouté(s) aux déchets, à la première poudre ou à la deuxième poudre lors du procédé de recyclage.

12. Procédé d'élaboration selon l'une des revendications 6 à 11, dans lequel la troisième phase métallique non magnétique sans terre rare est ajoutée au cours du procédé de recyclage.

13. Procédé d'élaboration selon l'une des revendications précédentes, dans lequel la poudre d'alliage NdFeB additionnée comprend entre 1% et 50%, entre 1% et 20%, voire entre 1% et 10% en volume de la troisième phase métallique non magnétique sans terre rare.

## Patentansprüche

1. Verfahren zum Herstellen eines NdFeB-Permanentmagneten in Form eines zu druckenden Objekts, das Verfahren umfassend die folgenden Schritte:
a) Bereitstellen eines NdFeB-Legierungspulvers, das aus Partikeln besteht, die eine durch Laserbeugung gemessene Größe von weniger als 300 Mikrometer aufweisen, von denen mindestens Partikel mit einer Größe von mehr als 5 Mikrometer aus mehreren Körnern einer magnetischen Nd₂Fe₁₄B-Hauptphase zusammengesetzt sind, die durch eine nichtmagnetische intergranulare Sekundärphase voneinander getrennt sind, die reich an seltenen Erden ist, wobei die Körner eine gemeinsame kristallographische Orientierung aufweisen, die eine magnetische Anisotropie erzeugt, das Pulver umfassend zwischen 10 % und 50 % Volumenanteil der intergranularen Sekundärphase, wobei die Größe eines Partikels als sein Sauter-Durchmesser definiert ist,
a) optionales Zugeben von Partikeln einer dritten nichtmagnetischen Metallphase ohne seltene Erde, die eine Schmelztemperatur aufweist, die geringer als oder gleich der der intergranularen Sekundärphase ist, in das NdFeB-Legierungspulver, zum Ausbilden eines zugesetztem NdFeB-Legierungspulvers,
b) additives Fertigen aus dem NdFeB-Legierungspulver oder aus dem zugesetzten NdFeB-Legierungspulver durch eine Technik, die ein Schmelzen von mindestens einer Phase des Pulvers beinhaltet, zum Herstellen des zu druckenden Objekts, wobei das Schmelzen bei einer Temperatur durchgeführt wird, die geringer als die Schmelztemperatur der magnetischen Hauptphase ist, um die intergranulare Sekundärphase und/oder die dritte Phase, sofern letztere vorhanden ist, und nicht die Hauptphase vollständig oder teilweise zu zerschmelzen.

2. Herstellungsverfahren nach dem vorstehenden Anspruch, wobei die Schmelztemperatur geringer als oder gleich 1000 °C, vorzugsweise geringer als oder gleich 800 °C oder sogar mehr bevorzugt geringer als oder gleich 600 °C ist.

3. Herstellungsverfahren nach einem der vorstehenden Ansprüche, wobei die Partikel des NdFeB-Legierungspulvers, umfassend die magnetische Hauptphase, vor oder während der Verfestigung des NdFeB-Permanentmagneten in Form eines gedruckten Objekts zum Übertragen einer magnetischen Anisotropie auf den Magneten orientiert werden.

4. Herstellungsverfahren nach einem der vorstehenden Ansprüche, wobei das NdFeB-Legierungspulver eine doppelte Partikelgrößenverteilung umfasst:
- eine erste Population, die auf eine erste Größe zentriert ist, und
- eine zweite Population, die auf eine zweite Größe zentriert ist, wobei die erste Größe eineinhalb- bis zehnmal größer als die zweite Größe ist.

5. Herstellungsverfahren nach einem der vorstehenden Ansprüche, wobei das NdFeB-Legierungspulver aus einem Verfahren zum Recyceln von soliden NdFeB-Magneten am Ende ihrer Lebensdauer stammt.

6. Herstellungsverfahren nach dem vorstehenden Anspruch, wobei Schritt a) das Recyclingverfahren umfasst, das die folgenden Schritte implementiert:
i) Zurückgewinnen von Abfall, umfassend zu recycelnde solide NdFeB-Magnete, wobei die NdFeB-Magnete eine magnetische Nd₂Fe₁₄B-Hauptphase und eine nichtmagnetische intergranulare Sekundärphase aufweisen;
ii) Wasserstoffdekrepitation, die auf den Abfall angewendet wird, der in eine Hydrierungskammer eingeführt wird, zum Ausbilden eines ersten Pulvers mit Partikeln, die die magnetische Haupthase und/oder die intergranulare Phase umfassen und eine Größe von weniger als oder gleich 5 mm aufweisen;
iii) Mahlen des ersten Pulvers zum Erhalten eines zweiten Pulvers mit Partikeln, die eine Größe von weniger oder gleich 300 Mikrometer aufweisen;
iv) Dehydratisieren des zweiten Pulvers zum Ausbilden des NdFeB-Legierungspulvers, das in Schritt a) bereitgestellt wird.

7. Herstellungsverfahren nach dem vorstehenden Anspruch, wobei Schritt ii) der Dekrepitation unter einem Wasserstoffpartial- oder -totaldruck zwischen 0,1 bar und 10 bar durchgeführt wird, wobei der Abfall eine Temperatur zwischen 200 °C und 500 °C erreicht.

8. Herstellungsverfahren nach dem vorstehenden Anspruch, wobei der Abfall vor Schritt ii) einem Schritt ii') des Vorwärmens in einer Vorwärmkammer, die in einer ersten Station angeordnet ist, bis zu einer Temperatur zwischen 300 °C und 500 °C unterzogen wird, anschließend dieser heiße Abfall in einer Hydrierungskammer, die in einer zweiten Station angeordnet ist, dem Schritt ii) unterzogen wird, wobei die exotherme Hydrierungsreaktion eine Selbstaufrechterhaltung der Temperatur des Abfalls in der Hydrierungskammer ermöglicht.

9. Herstellungsverfahren nach dem vorstehenden Anspruch, wobei die Vorwärmkammer und die Hydrierungskammer durch eine einzige und gleiche Kammer ausgebildet werden, die zwischen Schritt ii') und Schritt ii) von der ersten Station zu der zweiten Station bewegt wird.

10. Herstellungsverfahren nach einem der Ansprüche 6 bis 9, wobei in Schritt iii) das Mahlen des ersten Pulvers in einer Kugelmühle oder in einer Ringmühle oder in einer Strahlmühle durchgeführt wird.

11. Herstellungsverfahren nach einem der Ansprüche 6 bis 10, wobei mindestens eine Verbindung, die reich an seltener/seltenen Erde(n) ist, mindestens eine Verbindung aus frischem Legierungsmaterial von Typ TRFeB, insbesondere NdFeB (TR steht für Nd, Pr, Dy und/oder Tb) und/oder mindestens eine Verbindung bestehend aus der magnetischen Phase von Typ TR₂Fe₁₄B, insbesondere Nd₂Fe₁₄B, dem Abfall, dem ersten Pulver oder dem zweiten Pulver während des Recyclingverfahrens zugesetzt wird/werden.

12. Herstellungsverfahren nach einem der Ansprüche 6 bis 11, wobei die dritte nichtmagnetische Metallphase ohne seltene Erde im Laufe des Recyclingverfahrens zugegeben wird.

13. Herstellungsverfahren nach einem der vorstehenden Ansprüche, wobei das zugesetzte NdFeB-Legierungspulver zwischen 1 % und 50 %, zwischen 1 % und 20 % oder sogar zwischen 1 % und 10 % Volumenanteil der dritten nichtmagnetischen Metallphase ohne seltene Erde umfasst.

## Claims

1. Method for producing an NdFeB permanent magnet in the form of an object to be printed, the method comprising the following steps:
a) supplying an NdFeB alloy powder consisting of particles having a size, measured by laser diffraction, of less than 300 microns, among which at least particles of a size greater than 5 microns are composed of a plurality of grains of an Nd₂Fe₁₄B magnetic main phase separated from one another by a non-magnetic inter-granular secondary phase rich in rare earths, said grains having a common crystallographic orientation which generates magnetic anisotropy, the powder comprising between 10% and 50% by volume of inter-granular secondary phase, the size of a particle being defined as its equivalent Sauter diameter,
a') optionally adding particles of a third non-magnetic metal phase without rare earth, having a melting temperature lower than or equal to that of the inter-granular secondary phase, to the NdFeB alloy powder, to form an additioned NdFeB alloy powder,
b) additive manufacturing using the NdFeB alloy powder or the additioned NdFeB alloy powder, by a technique involving melting at least one phase of the powder, to produce the object to be printed, the melting being carried out at a temperature below the melting temperature of the magnetic main phase, so as to melt all or part of the inter-granular secondary phase and/or the third phase when the third phase is present, and not said main phase.

2. Production method according to the preceding claim, wherein the melting temperature is less than or equal to 1000°C, preferably less than or equal to 800°C, and more preferably less than or equal to 600°C.

3. Production method according to one of the preceding claims, wherein the NdFeB alloy powder particles comprising the magnetic main phase are oriented before or during the consolidation of the NdFeB permanent magnet in the form of a printed object, to impart magnetic anisotropy to said magnet.

4. Production method according to one of the preceding claims, wherein the NdFeB alloy powder comprises a double particle size distribution:
- a first population centered on a first size, and
- a second population centered on a second size, the first size being one-and-a-half to ten times greater than the second size.

5. Production method according to one of the preceding claims, wherein the NdFeB alloy powder is derived from a method for recycling end-of-life NdFeB bulk magnets.

6. Production method according to the preceding claim, wherein step a) comprises the recycling method which implements the following steps:
i) recovering waste comprising NdFeB bulk magnets to be recycled, said NdFeB magnets having an Nd₂Fe₁₄B magnetic main phase and a non-magnetic inter-granular secondary phase;
ii) hydrogen decrepitation, applied to said waste introduced into a hydriding chamber, to form a first powder with particles comprising the magnetic main phase and/or the inter-granular phase and having a size of less than or equal to 5mm;
iii) milling the first powder, to obtain a second powder with particles having a size of less than or equal to 300 microns;
iv) dehydriding the second powder, to form the NdFeB alloy powder supplied in step a).

7. Production method according to the preceding claim, wherein the decrepitation step ii) is carried out under a partial or total hydrogen pressure of between 0.1 bar and 10 bar, the waste reaching a temperature of between 200°C and 500°C.

8. Production method according to the preceding claim, wherein, prior to step ii), the waste undergoes a preheating step ii') in a preheating chamber arranged in a first station, up to a temperature of between 300°C and 500°C, then this hot waste undergoes step ii) in the hydriding chamber arranged in a second station, the exothermic hydriding reaction allowing the temperature of the waste in the hydriding chamber to be self-sustaining.

9. Production method according to the preceding claim, wherein the preheating chamber and the hydriding chamber are formed by a single chamber, moved from the first station to the second station, between step ii') and step ii).

10. Production method according to one of claims 6 to 9, wherein, in step iii), the milling of the first powder is carried out in a ball mill or in a ring mill or in a gas jet mill.

11. Production method according to one of claims 6 to 10, wherein at least one compound rich in rare earth(s), at least one compound of fresh TRFeB-type alloy, in particular NdFeB (TR meaning Nd, Pr, Dy and/or Tb), and/or at least one compound consisting of TR₂Fe₁₄B-type magnetic phase, in particular Nd₂Fe₁₄B, is added to the waste, to the first powder or to the second powder during the recycling method.

12. Production method according to one of claims 6 to 11, wherein the third non-magnetic metal phase without rare earth is added during the recycling method.

13. Production method according to one of the preceding claims, wherein the additioned NdFeB alloy powder comprises between 1% and 50%, between 1% and 20%, or between 1% and 10% by volume of the third non-magnetic metal phase without rare earth.
